# EUROPEAN PATENT APPLICATION

(11) **EP 4 234 128 A1**
(43) Date of publication of application: **30.08.2023**
(21) Application number: 21803540.0
(22) Date of filing: 03.02.2021
(51) Int. Cl.: B22F 3/11, B22F 3/24, B22F 5/10, B33Y 10/00

(54) **LASER ADDITIVE MANUFACTURING-BASED PREPARATION METHOD FOR HIGH MELTING POINT KELVIN STRUCTURE LATTICE METAL**

(30) Priority: 21.10.2020 CN 202011127736
(71) Applicant: Shenyang Research Institute of Foundry Co., Ltd., Liaoning 110022 (CN)
(72) Inventor: YU, Bo, Shenyang, Liaoning 110022 (CN); WEI, Yanpeng, Shenyang, Liaoning 110022 (CN); SHI, Jian, Shenyang, Liaoning 110022 (CN); GAO, Peng, Shenyang, Liaoning 110022 (CN); CHENG, Jingchang, Shenyang, Liaoning 110022 (CN); LIU, Shichang, Shenyang, Liaoning 110022 (CN); WANG, Jingcheng, Shenyang, Liaoning 110022 (CN); MIAO, Zhiquan, Shenyang, Liaoning 110022 (CN)
(74) Representative: Casalonga
(86) International application number: PCT/CN2021/000025
(87) International publication number: WO 2021/227539

(57) **Abstract**

A laser additive manufacturing-based preparation method for a high melting point Kelvin structure lattice metal. The method is based on selective laser melting technology, performs hole pattern structure process adaptability design on a Kelvin structure lattice metal, establishes a three-dimensional model of the Kelvin structure lattice metal, and performs slicing discretization processing and layer-by-layer selective laser printing, to obtain the Kelvin structure lattice metal. The Kelvin structure lattice metal is a three-dimensional structure formed by expanding basic units, prisms of Kelvin structure lattice metal units are solid bodies, the remaining portions are all virtual bodies, and two adjacent Kelvin structure lattice metal units share one prism. The preparation of a high melting point Kelvin structure lattice metal having a fine structure is achieved by means of Kelvin structure lattice metal geometric parameter design and geometric parameter boundary setting, and precise control of selective laser melting process parameters.

## Description

### BACKGROUND OF THE PRESENT INVENTION

### FIELD OF INVENTION

The present invention relates to the technical field of additive manufacturing of lattice metals, and more particularly to a selective laser additive manufacturing method for a lightweight and high-temperature resistant Kelvin structure lattice metal.

### DESCRIPTION OF RELATED ARTS

Lattice metal is used as a kind of porous material and is named because of its periodic ordered structure. The lattice metal has the structural characteristics of lightweight, high specific strength and rigidity, as well as functional characteristics such as vibration and noise reduction, energy absorption and so on. It has received extensive attention from the international academic community and is considered to be one of the most promising new generations of lightweight materials. It has broad application prospects and is widely used in aerospace, shipbuilding and other fields.

The methods for preparing lattice metal in the prior art mainly include investment casting method, deformation forming method, metal wire approaches method and so on. Among them, the deformation forming method and the metal wire approaches method have high requirements on the ductility of the base material, the selectable range of the material is narrow, and the pore structure of the prepared lattice metal is limited. The investment casting method can prepare a lattice metal with a complex pore structure, but on the one hand, its preparation process is long and complicated; on the other hand, due to the limitation of the casting process, the pore diameter of the lattice metal prepared by investment casting method is relatively thick and it cannot be used for preparing a lattice metal with a fine structure.

Additive manufacturing technology transforms from design based on process constraints to design based on function-driven, which can realize the integration of the structure and function in the process of the design and preparation. Among them, the selective laser melting method uses the principle of layer-by-layer superimposition to prepare complex structures, has high processing accuracy and simple flow. In particular, it can prepare lattice metals with small pore diameters and complex pore structures, so it has unique advantages in preparing lattice metals. However, at present, the pore structures of lattice metals prepared by the selective laser melting method are generally simple cubic structure, tetrahedral structure, octahedral structure, pyramid structure and Kagome structure, etc. The existing research results show that the mechanical properties of three-dimensional lattice metals expanded from the above-mentioned pore structures are all anisotropic, which makes the lattice metals not having sufficient ability to adapt to complex stress conditions and greatly limits the promotion and application of lattice metals in aerospace, shipbuilding and other fields.

It can be seen from the above analysis that the traditional preparation method has many limitations such as the selection of the matrix material and pore structure, etc. The investment casting method has a complicated process and relatively thick pore size. At the same time, the pore structure commonly used in lattice metals has led to the anisotropic properties of the lattic metals, which limits the application and promotion of the lattice metals.

### SUMMARY OF THE PRESENT INVENTION

Aiming at the shortcomings of the prior art, the present invention provides a method for preparing a lattice metal with a high melting point Kelvin structure based on a selective laser additive manufacturing technology to overcome the disadvantages of the complicated process and relatively thick pore diameter of the investment casting method. Another purpose of the present invention is to solve anisotropy of the current lattice metals due to the pore structures which is resulted in limited application conditions and insufficient adaptability, the Kelvin structure unit cell is introduced to design the pore structure of the lattice metal, and the laser additive manufacturing process for a spatially isotropic Kelvin structure lattice metal is proposed, which broadens the breadth and depth of the application of lattice metal. The high melting point Kelvin structure lattice metal prepared by the present invention has a smooth stress-strain curve, an obvious plastic yield platform, and isotropic mechanical properties in three directions in space.

In order to achieve the above purposes, the specific technical solutions of the present invention are as follows:
a method for preparing a high melting point Kelvin structure lattice metal based on a laser additive manufacturing technology, wherein the method is based on a selective laser melting technology, comprising the following steps:
Step 1: carrying out a process adaptability design of a pore structure of a Kelvin structure lattice metal and building a three-dimensional model of the Kelvin structure lattice metal based on a selective laser melting technology;
Step 2: carrying out slicing processing for the three-dimensional model of the Kelvin structure lattice metal established in Step 1, using section data of the slices as a laser scanning path to import into a selective laser melting device, and setting the corresponding printing parameters;
Step 3: adding a metal powder into the selective laser melting device and utilizing the laser scanning path and the printing parameters in step 2, carrying out layer-by-layer selective laser printing on the Kelvin structure lattice metal under argon protective atmosphere to obtain a Kelvin structure lattice metal, wherein the Kelvin structure lattice metal is a three-dimensional Kelvin structure expanded from a basic unit, wherein a material of the three-dimensional Kelvin structure is a high melting point metal material, wherein the basic unit is a Kelvin structure lattice metal unit with a prism as the main body thereof, the prism of the Kelvin structure lattice metal unit is a solid body, a remaining portion of the Kelvin structure lattice metal unit except the prism is a virtual body, wherein two adjacent Kelvin structure lattice metal units share one prism; the high melting point metal material is a steel material or a superalloy.
Step 4: carrying out heat treatment on the Kelvin structure lattice metal obtained in Step 3 to obtain a high melting point Kelvin structure lattice metal.

The printing parameters in Step 2 include laser power, scanning speed, scanning spacing, thickness of a single layer of powder, and light spot diameter.

The porosity of the high melting point Kelvin structure lattice metal is 43% to 93%; the prism diameter of the high melting point Kelvin structure lattice metal is 0.3 to 3 mm, and the length to diameter ratio is 1.1 to 3.3.

The laser power is 50W~260W, the scanning speed is 200mm/s∼1100mm/s, the scanning spacing is 0.09mm~0.12mm, the thickness of the single layer of the powder is 30~50um, the diameter of the light spot is 0.1mm.

In Step 3, the particle size of the metal powder is 15-53um, and the oxygen content of the metal powder is ≤ 400ppm.

The high melting point metal material is 316L or 304 stainless steel, the heat treatment is specifically solution treatment, and the treating temperature is 1080°C.

The high melting point metal material is GH4169 superalloy, the heat treatment is setting the temperature to 960°C, preserving heat for 1h, and water cooling; then setting the temperature to 720°C, preserving heat for 8h, and then furnace cooling at a cooling rate of 50°C/h to 620°C, preserving heat for 8h, air cooling. The heat treatment of the high melting point metal material GH625 superalloy is setting the temperature at 950-1030°C and air cooling.

The adaptable design of the pore structure of the Kelvin structure lattice metal based on the selective laser melting technology is to design the tetradecahedron Kelvin structure unit into a Kelvin structure lattice metal. The Kelvin structures unit with a prismatic structure as its main body. The three-dimensional design software is adopted to carry out parametric modeling of the Kelvin structure lattice metal. The range of the design parameters of the pore structure suitable for the selective laser melting process is determined by adjusting the length to diameter ratio of the prism and the porosity of the high melting point Kelvin structure lattice metal is regulated effectively.

The beneficial effects of the present invention:
1. The present invention adopts the selective laser melting method to prepare the high melting point Kelvin structure lattice metal, which breaks through the limitation of narrow material selection range and single pore structure in the prior art, and realizes preparation of lattice metal having a larger pore structure, pore size, porosity, etc. In particular, it breaks through the limitation of the pore diameter range when the complex lattice metal is prepared by the investment casting method, and realizes the preparation of the lattice metal with a finer pore diameter.
2. The present invention adopts the selective laser melting method to prepare the high melting point Kelvin structure lattice metal, which overcomes the defects of the universal anisotropic mechanical properties of the lattice metal in the prior art, and realizes the preparation of the lattice metal with isotropic mechanical properties, effectively broaden the breadth and depth of the application of lattice metals in aerospace, shipbuilding and other fields.
3. The high melting point Kelvin structure lattice metal prepared by the present invention is not only suitable for complex working conditions, but also has an outstanding characteristics of high temperature resistance. It is a lightweight component with integrated structure and function, and is especially suitable for thermal protection components and other equipments with integrated structure and function in aerospace and other fields.

### BRIEF DESCRIPTION OF THE DRAWINGS

In order to more clearly explain the technical scheme of the embodiments of the present invention, the following will briefly introduce the drawings needed to be used in the embodiment. It should be understood that the following drawings only show some embodiments of the present invention, so they should not be regarded as limiting the scope. For those skilled in the art, without paying creative labor, other relevant drawings can also be obtained from these drawings.
Fig.1 is a schematic diagram of a design model of the Kelvin structure lattice metal unit.
Fig.2 is a schematic diagram of a design model of a three-dimensional structure of the high melting point Kelvin structure lattice metal.
Fig.3 is a view of a lattice metal sample of the high melting point Kelvin structure lattice metal prepared by a selective laser melting method.
Fig.4 is a compressive stress-strain curve of three directions in the space of the Kelvin structure lattice with 316L stainless steel as the matrix.

### DETAILED DESCRIPTION OF THE PREFERRED EMBODIMENT

The preparation method of the present invention will be described in detail below with reference to the accompanying drawings. The examples cited are only used to explain the present invention, and are not used to limit the scope of the present invention.

### Embodiment 1

This embodiment is to design and prepare a high melting point Kelvin structure lattice metal with a porosity of 43% and 316L stainless steel as the matrix;

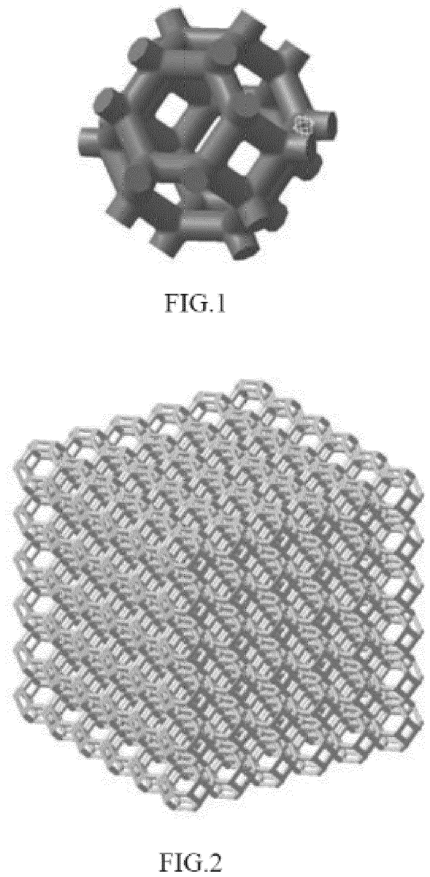

As shown in Fig.1, it is a design model of a Kelvin structure lattice metal unit. The Kelvin structure lattice metal unit is an adaptive design adopting a three-dimensional design software for a selective laser melting process, wherein the prism diameter is 0.3mm and the prism length is 0.33mm, the length to diameter ratio of the prism is 1.1, wherein the outer contour size of the Kelvin structure lattice metal three-dimensional design model is 6.5×3.7×3.7 mm and the porosity of the Kelvin structure lattice metal three-dimensional design model is 43%, as shown in Fig.2.

Preparing the high melting point Kelvin structure lattice metal with 316L stainless steel as the matrix employing the selective laser melting method, comprising the following steps:
Step 1: carrying out a adaptive design of a pore structure of a Kelvin structure lattice metal and establishing a three-dimensional model of the Kelvin structure lattice metal by using a three-dimensional design software, based on the characters of the selective laser melting process;
Step 2: slicing the three-dimensional model of the Kelvin structure lattice metal by using a slicing software, which is established in Step 1 to obtain the section data of each layer of the Kelvin structure lattice metal, and importing the section data into the selective laser melting device as a laser scanning path, and setting the corresponding printing parameters; The printing parameters include the laser power, scanning speed, scanning spacing, thickness of a single layer of powder, and the light spot diameter.

The laser power is 50W, the scanning speed is 1100mm/s, the scanning spacing is 0.12mm, and the thickness of the single layer is 50um, the diameter of the light spot is 0.1mm.

Step 3: adding the metal powder into the selective laser melting equipment, adopting the laser scanning path in Step 1 and the printing parameters set in Step 2, the Kelvin structure lattice metal is obtained by utilizing the selective laser printing with the layer-by-layer.

The metal powder is 316L stainless steel, the particle size is 15-53um, and the oxygen content is less than or equal to 400ppm.

Step 4: carrying out heat treatment of the Kelvin structure lattice metal obtained in Step 3 to obtain a high melting point Kelvin structure lattice metal. The solution treatment temperature is 1080°C.

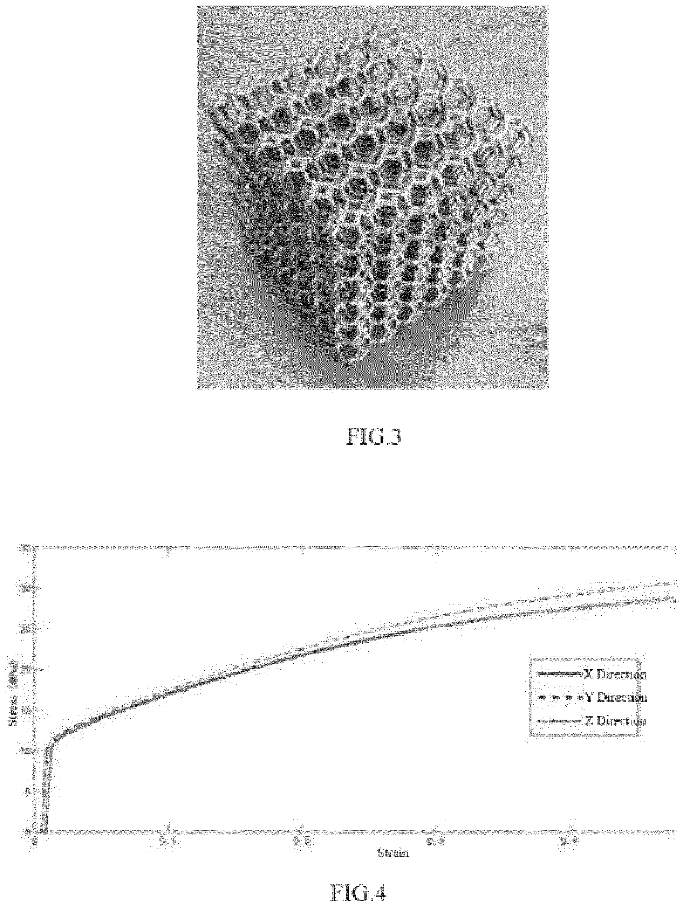

The high melting point Kelvin structure lattice metal prepared by the present invention has a smooth stress-strain curve, an obvious plastic yield platform, and isotropic mechanical properties in three directions in space. As shown in Fig.4.

### Embodiment 2

This embodiment is to design and prepare a high melting point Kelvin structure lattice metal with a porosity of 43% and 304 stainless steel as the matrix;

As shown in Fig.1, it is a design model of a Kelvin structure lattice metal unit. The Kelvin structure lattice metal unit is an adaptive design adopting a three-dimensional design software for a selective laser melting process, wherein the prism diameter is 0.8mm and the prism length is 1.2mm, the length to diameter rarion of the prism is 1.5, wherein the outer contour size of the Kelvin structure lattice metal three-dimensional design model is 23.8×13.6×13.6 mm and the porosity of the Kelvin structure lattice metal three-dimensional design model is 71%, as shown in Fig.2.

Preparing the high melting point Kelvin structure lattice metal with 304 stainless steel as the matrix employing the selective laser melting method, comprising the following steps:
Step 1: carrying out a adaptive design of a pore structure of a Kelvin structure lattice metal and establishing a three-dimensional model of the Kelvin structure lattice metal, using a three-dimensional design software, based on the characters of the selective laser melting process;
Step 2: slicing the three-dimensional model of the Kelvin structure lattice metal by using a slicing software, which is established in Step 1 to obtain the section data of each layer of the Kelvin structure lattice metal, and importing the section data into the selective laser melting device as a laser scanning path, and setting the corresponding printing parameters; The printing parameters include the laser power, scanning speed, scanning spacing, thickness of a single layer of powder, and light spot diameter.

The laser power is 80W, the scanning speed is 900mm/s, the scanning spacing is 0.10mm, and the thickness of the single layer is 40um, the diameter of the light spot is 0.1mm.

Step 3: adding the metal powder into the selective laser melting equipment, adopting the laser scanning path in Step 1 and the printing parameters set in Step 2, the Kelvin structure lattice metal is obtained by utilizing the selective laser printing with the layer-by-layer.

The metal powder is 304 stainless steel, the particle size is 15-53um, and the oxygen content is less than or equal to 400ppm.

Step 4: carrying out heat treatment of the Kelvin structure lattice metal obtained in Step 3 to obtain a high melting point Kelvin structure lattice metal, the solution treatment temperature is 1080°C.

### Embodiment 3

This embodiment is to design and prepare a high melting point Kelvin structure lattice metal with a porosity of 82% and GH4169 superalloy as the matrix;

As shown in Fig.1, it is a design model of a Kelvin structure lattice metal unit. The Kelvin structure lattice metal unit is an adaptive design adopting a three-dimensional design software for a selective laser melting process, wherein the prism diameter is 1.2mm and the prism length is 2.4mm, the length to diameter ratio of the prism is 2.0, wherein the outer contour size of the Kelvin structure lattice metal three-dimensional design model is 47.5×27.1×27.1 mm and the porosity of the Kelvin structure lattice metal three-dimensional design model is 82%, as shown in Fig.2.

Preparing the high melting point Kelvin structure lattice metal with GH4169 superalloy as the matrix employing the selective laser melting method, comprising the following steps:
Step 1: carrying out a adaptive design of a pore structure of a Kelvin structure lattice metal and establishing a three-dimensional model of the Kelvin structure lattice metal, using a three-dimensional design software, based on the characters of the selective laser melting process;
Step 2: slicing the three-dimensional model of the Kelvin structure lattice metal by using a slicing software, which is established in Step 1 to obtain the section data of each layer of the Kelvin structure lattice metal, and importing the section data into the selective laser melting device as a laser scanning path, and setting the corresponding printing parameters; The printing parameters include the laser power, scanning speed, scanning spacing, thickness of a single layer of powder, and the light spot diameter.

The laser power is 260W, the scanning speed is 200 mm/s, the scanning spacing is 0.09mm, and the thickness of the single layer is 30um, the diameter of the light spot is 0.1mm.

Step 3. adding the metal powder into the selective laser melting equipment, adopting the laser scanning path in Step 1 and the printing parameters set in Step 2, the Kelvin structure lattice metal is obtained by utilizing the selective laser printing with the layer-by-layer.

The metal powder is GH4169 superalloy, the particle size is 15-53um, and the oxygen content is less than or equal to 400ppm.

Step 4: carrying out heat treatment of the GH4169 superalloy Kelvin structure lattice metal obtained in Step 3, wherein the heat-treating process is setting the temperature to 960°C, preserving heat for 1h, and water cooling; then setting the temperature to 720°C, preserving heat for 8h, and then furnace cooling at a cooling rate of 50°C/h to 620°C, preserving heat for 8h, air cooling.

### Embodiment 4

This embodiment is to design and prepare a high melting point Kelvin structure lattice metal with a porosity of 93% and GH625 superalloy as the matrix;

As shown in Fig.1, it is a design model of a Kelvin structure lattice metal unit. The Kelvin structure lattice metal unit is an adaptive design adopting a three-dimensional design software for a selective laser melting process, wherein the prism diameter is 3mm and the prism length is 9.9mm, the length to diameter ratio of the prism is 3.3, wherein the outer contour size of the Kelvin structure lattice metal three-dimensional design model is 196.0×112.0×112.0 mm and the porosity of the Kelvin structure lattice metal three-dimensional design model is 93%, as shown in Fig.2.

Preparing the high melting point Kelvin structure lattice metal with GH625 superalloy as the matrix employing the selective laser melting method, comprising the following steps:
Step 1: carrying out a adaptive design of a pore structure of a Kelvin structure lattice metal and establishing a three-dimensional model of the Kelvin structure lattice metal, using a three-dimensional design software, based on the characters of the selective laser melting process;
Step 2: slicing the three-dimensional model of the Kelvin structure lattice metal by using a slicing software, which is established in Step 1 to obtain the section data of each layer of the Kelvin structure lattice metal, and importing the section data into the selective laser melting device as a laser scanning path, and setting the corresponding printing parameters; The printing parameters include the laser power, scanning speed, scanning spacing, thickness of a single layer of powder, and the light spot diameter.

The laser power is 150W, the scanning speed is 350mm/s, the scanning spacing is 0.10mm, and the thickness of the single layer is 40um, the diameter of the light spot is 0.1mm.

Step 3: adding the metal powder into the selective laser melting equipment, adopting the laser scanning path in Step 1 and the printing parameters set in Step 2, the Kelvin structure lattice metal is obtained by utilizing the selective laser printing with the layer-by-layer.

The metal powder is GH625 superalloy, the particle size is 15-53um, and the oxygen content is less than or equal to 400ppm.

Step 4: carrying out heat treatment of the GH625 superalloy Kelvin structure lattice metal obtained in Step 3, wherein the heat treatment process is setting the temperature to 950~1030°C, air cooling.

## Claims

1. A method for preparing a high melting point Kelvin structure lattice metal based on a laser additive manufacturing technology, **characterized in that**, said method is based on selective laser additive manufacturing, comprising the following steps:
Step 1: carrying out a process adaptability design of a pore structure of a Kelvin structure lattice metal and building a three-dimensional model of the Kelvin structure lattice metal based on a selective laser melting technology;
Step 2: carrying out slicing processing for the three-dimensional model of the Kelvin structure lattice metal established in Step 1, using section data of the slices as a laser scanning path to import into a selective laser melting device, and setting the corresponding printing parameters;
Step 3: adding a metal powder into the selective laser melting device and utilizing the laser scanning path and the printing parameters in step 2, carrying out layer-by-layer selective laser printing on the Kelvin structure lattice metal under argon protective atmosphere to obtain a Kelvin structure lattice metal, wherein the Kelvin structure lattice metal is a three-dimensional Kelvin structure expanded from a basic unit, wherein a material of the three-dimensional Kelvin structure is a high melting point metal material, wherein the basic unit is a Kelvin structure lattice metal unit with a prism as the main body thereof, the prism of the Kelvin structure lattice metal unit is a solid body, a remaining portion of the Kelvin structure lattice metal unit except the prism is a virtual body, wherein two adjacent Kelvin structure lattice metal units share one prism;
Step 4: carrying out heat treatment on the Kelvin structure lattice metal obtained in Step 3 to obtain a high melting point Kelvin structure lattice metal, wherein the high melting point Kelvin structure lattice metal has a porosity of 43% to 93%, the high melting point Kelvin structure lattice metal has a prism diameter of 0.3 to 3 mm, and a length to diameter ratio of 1.1 to 3.3, wherein the printing parameters in Step 2 comprises a laser power, a scanning speed, a scanning spacing, a thickness of a single layer of powder and a light spot diameter, wherein the laser power is 50W~260W, the scanning speed is 200 mm/s∼1100mm/s, the scanning spacing is 0.09mm~0.12mm, the thickness of a single layer of powder is 30~50um, and the light spot diameter is 0.1mm.

2. The method for preparing a high melting point Kelvin structure lattice metal based on a laser additive manufacturing technology, as recited in claim 1, **characterized in that**, the metal powder in Step 3 has a particle size of 15-53um and an oxygen content ≤ 400ppm.

3. The method for preparing a high melting point Kelvin structure lattice metal based on a laser additive manufacturing technology, as recited in claim 1, **characterized in that**, the high melting point metal material is a steel material or a superalloy.

4. The method for preparing a high melting point Kelvin structure lattice metal based on a laser additive manufacturing technology, as recited in claim 3, **characterized in that**, when the high melting point metal material is 316L or 304 stainless steel, the heat treatment is specifically a solution treatment at a temperature of 1080°C.

5. The method for preparing a high melting point Kelvin structure lattice metal based on a laser additive manufacturing technology, as recited in claim 3, **characterized in that**, the high melting point metal material is GH4169 superalloy, the heat treatment process is setting a temperature to 960°C, preserving heat for 1h, and carrying out water cooling; then setting the temperature to 720°C, preserving heat for 8h, and then furnace cooling at a cooling rate of 50°C/h to 620°C, preserving heat for 8h, and carrying out air cooling.

6. The method for preparing a high melting point Kelvin structure lattice metal based on a laser additive manufacturing technology, as recited in claim 3, **characterized in that**, the high melting point metal material is GH625 superalloy, the heat treatment process is setting the temperature to 950 to 1030°C, and carrying out air cooling.
